# EUROPÄISCHE PATENTSCHRIFT

(11) **EP 0 983 531 B1**
(45) Veröffentlichungstag und Bekanntmachung des Hinweises auf die Patenterteilung: **25.09.2002**
(21) Anmeldenummer: 98929298.2
(22) Anmeldetag: 12.05.1998
(51) Int. Cl.: G02F 1/141, G06K 19/067, C09K 19/02, C09K 19/42

(54) **CHIPKARTE MIT BISTABILER ANZEIGE**
CHIP CARD WITH BISTABLE DISPLAY
CARTE A PUCE A INDICATEUR BISTABLE

(30) Priorität: 13.05.1997 DE 19719822
(43) Veröffentlichungstag der Anmeldung: 08.03.2000
(73) Patentinhaber: Aventis Research & Technologies GmbH & Co KG, 65926 Frankfurt am Main (DE)
(72) Erfinder: DÜBAL, Hans-Rolf, D-65343 Eltville (DE)
(74) Vertreter: Isenbruck, Günter
(86) Internationale Anmeldenummer: EP9802768
(87) Internationale Veröffentlichungsnummer: WO98052097

(56) Entgegenhaltungen:
- EP-A- 0 291 259
- EP-A- 0 292 244
- EP-A- 0 297 554
- EP-A- 0 844 293
- DE-A- 4 218 314
- US-A- 5 437 816
- PATENT ABSTRACTS OF JAPAN vol. 014, no. 501 (M-1043), 2.November 1990 -& JP 02 208096 A (IDEMITSU KOSAN CO LTD), 17.August 1990,

## Beschreibung

Unter einer Chipkarte versteht man im allgemeinen eine Karte aus Kunststoff, beispielsweise im Format übliche Kreditkarten, versehen mit einem integrierten Schaltkreis, welcher Informationen elektronisch gespeichert hat.

Üblicherweise bestehen Chipkarten aus PVC oder ABS und enthalten nebem dem integrierten Schaltkreis zusätzlich eine "Antenne" in Form von Flachspulen oder elektrisch leitende Kontakte.

Chipkarten sind beispielsweise als Telefonkarten, Kreditkarten, "Medicards", "Cashcards" usw. bereits in vielfältigem Einsatz.

Für die Zukunft erwartet man ein weiteres Vordringen dieser Technologie in neue ereiche, wie "Electronic Money", dem Ersatz von Bargeld, Fahrkarten und Pay-TV.

Eine "Smart Card" ist eine Chipkarte, deren integrierter Schaltkreis kontrolliert, wer die gespeicherten Informationen zu welchem Zweck verwendet.

Wünschenswert für Chipkarten ist eine elektronische Anzeige auf der Karte, etwa über den Füllstand. Eine solche Anzeige ermöglicht beispielsweise die Anzeige des auf einer Telefonkarte noch vorhandenen Restbetrages.

Eine solche Anzeige sollte auch ohne das Anlegen einer elektrischen Spannung sichtbar sein, da weder die Dicke noch die Herstellkosten einer Karte den Einbau einer Batterie erlauben. Die Anzeige muß also eine optische Speicherfähigkeit besitzen.

Aus Gründen der optischen Bistabilität wurden für solche Anwendungen ferroelektrische Flüssigkristalldisplays (FLCD) sowie auch bistabile nematische Anzeigen vorgeschlagen [siehe R. Bürkle, R. Klette, E. Lüder, R. Bunz, T. Kallfass, 1997 International Symposium, Seminar & Exhibition, Society of Information Display, Boston, Massachusetts, Abstract 9.4, Seite 34].

Die Verwendung von FLCD hätte den Vorteil einer niedrigen Arbeitsspannung, die ohne weiteres in einem Bereich von unterhalb 5 Volt liegen kann. Nachteilig bei dieser Technologie ist die hohe Empfindlichkeit gegenüber Stoß, Druck und Deformation, sowie die schwierige Ausrichtung der smektischen Lagen, die zur Ausbildung kontrastsenkender Deformationen und Störungen der Kristallstruktur neigen.

Bistabile nematische Anzeigen besitzen neben einer ebenfalls starken mechanischen Empfindlichkeit den zusätzlichen Nachteil relativ hoher Schaltspannungen, die oberhalb von 20 V liegen.

Die Aufgabe, ein mechanisch und thermisch stabiles optisch bistabiles Display für den Einsatz in Chipkarten zu finden, das bei Spannungen unterhalb von 15 Volt, vorzugsweise unterhalb von 5 Volt betrieben werden kann, einen hohen Kontrast und eine hohe Helligkeit bzw. Reflektivität besitzt, wird überraschenderweise durch Verwendung von Gemischen aus niedermolekularen und polymeren oder oligomeren FLC gelöst.

Ein Gegenstand der Erfindung ist daher eine Chipkarte, enthaltend ein ferroelektrisches Flüssigkristalldisplay, wie in Auspruch 1 definiert.

Das erfindungsgemäße Display kann bei Spannungen > 15 V, im allgemeinen > 5 V geschaltet werden, ist in einem breiten Temperaturbereich beschreibbar und robust gegenüber alltagsüblichen Belastungen, wie Druck, Biegung oder thermische Deformation.

Das erfindungsgemäße Display weist einen hohen Schaltwinkel, eine niedrige Schaltspannung und eine geringe Temperaturabhängigkeit auf. Defektlinien können unterdrückt werden.
Der niedermolekulare geneigt smektische, optische aktive (ferroelektrische) Flüssigkristall (FLC) besteht vorzugsweise aus einer Mischung niedermolekularer Verbindungen. Arbeitsphase ist vorzugsweise die S_{c}*-Phase. Vorzugsweise enthalten die Mischungen eine nicht optisch aktive Basismischung, vorzugsweise in einem Anteil von > 50 %, und eine oder mehrere optisch aktive Verbindungen (Dotierstoffe).
Der niedermolekulare FLC weist im allgemeinen eine Spontanpolarisation von 2 bis 40 nCcm⁻² auf.

Geeignete Verbindungen für den niedermolekularen FLC sind dem Fachmann bekannt.
Allgemein geeignete Verbindungen lassen sich z.B. durch die allgemeine Formel (I) beschreiben,

R¹(-A¹-M¹)ₐ(-A²-M²)_{b}-(-A³-M³)_{c}(-A⁴)-R² (I)

wobei die Symbole und Indizes folgende Bedeutungen haben:
R¹, R² sind gleich oder verschieden
   a) Wasserstoff,
   b) ein geradkettiger oder verzweigter Alkylrest (mit oder ohne asymmetrisches C-Atom) mit 1 bis 20 C-Atomen, wobei
      b1) eine oder mehrere nicht benachbarte und nicht terminale CH₂-Gruppen durch -O-, -S-, -CO-O-, -O-CO-, -O-CO-O- oder -Si(CH₃)₂- ersetzt sein können und/oder
      b2) eine oder mehrere CH₂-Gruppen durch -CH=CH-, Cyclopropan-1,2-diyl, 1,4-Phenylen, 1,4-Cyclohexylen oder 1,3-Cyclopentylen ersetzt sein können und/oder
      b3) ein oder mehrere H-Atome durch F und/oder Cl ersetzt sein können und/oder
      b4) die terminale CH₃-Gruppe durch eine der folgenden chiralen Gruppen (optisch aktiv oder racemisch) ersetzt sein kann: 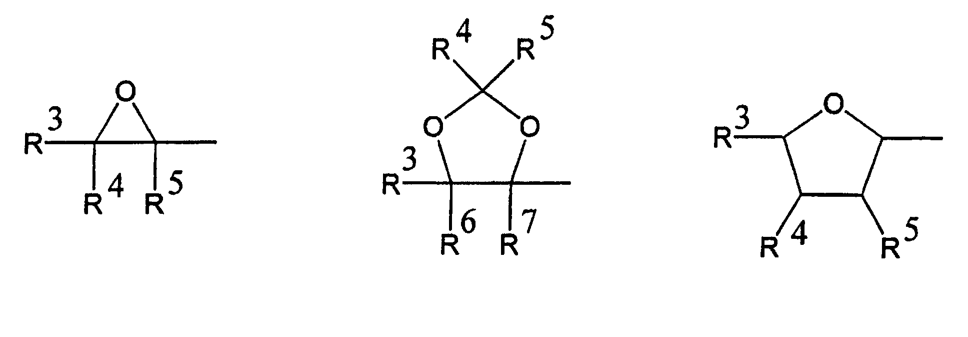 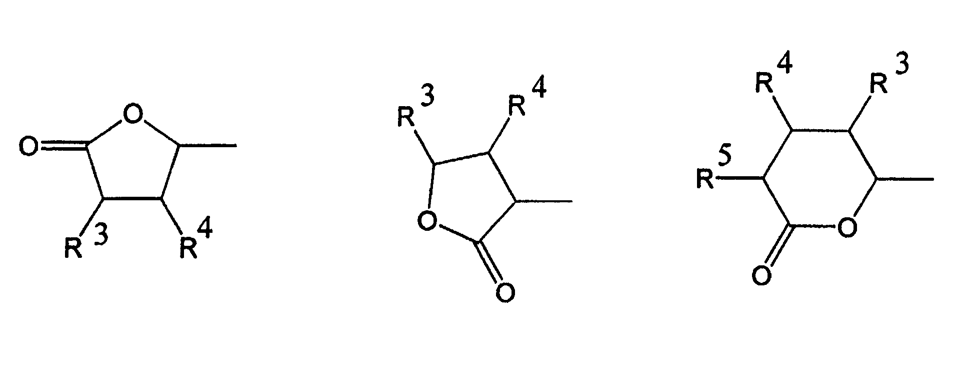 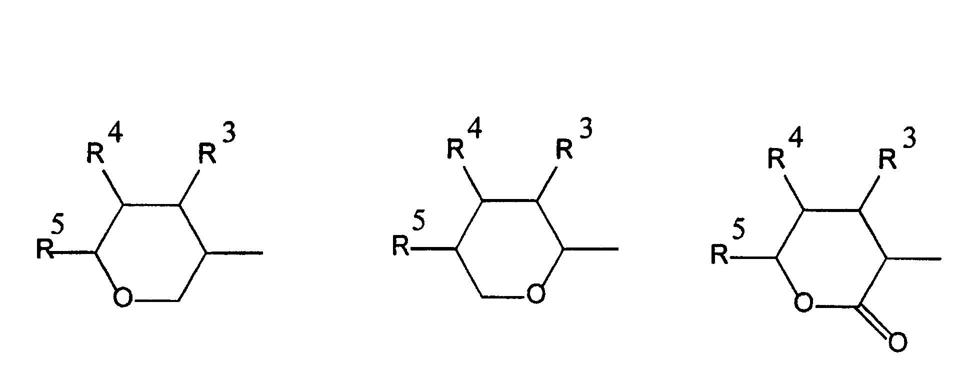 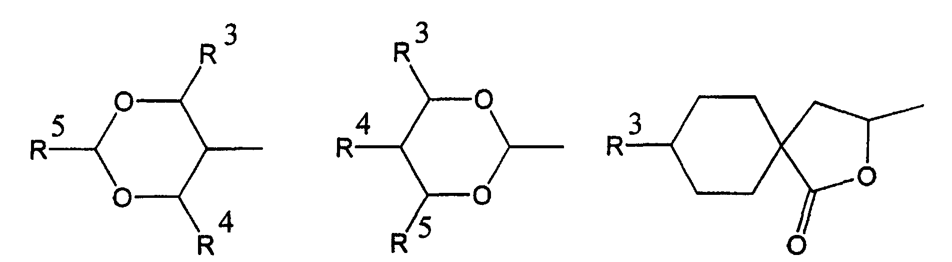 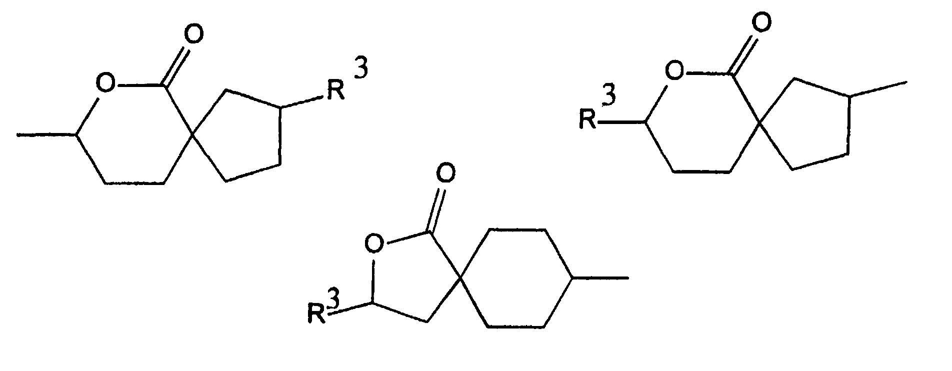 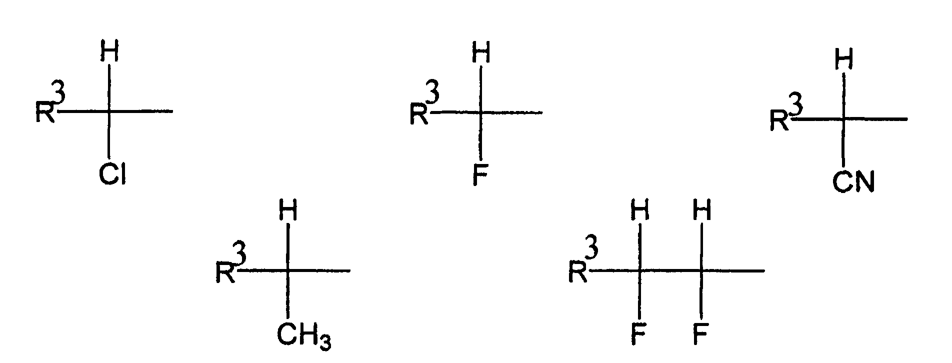 mit der Maßgabe, daß höchstens einer der Reste R¹, R² Wasserstoff ist;
R³, R⁴, R⁵, R⁶, R⁷ sind gleich oder verschieden
   a) Wasserstoff
   b) ein geradkettiger oder verzweigter Alkylrest (mit oder ohne asymmetrisches Kohlenstoffatom) mit 1 bis 16 C-Atomen, wobei
      b1 ) eine oder mehrere nicht benachbarte und nicht terminale CH₂-Gruppen durch -O- ersetzt sein können und/oder
      b2) eine oder zwei CH₂-Gruppen durch -CH=CH- ersetzt sein können,
   c) R⁴ und R⁵ zusammen auch -(CH₂)₄- oder -(CH₂)₅-, wenn sie an ein Oxiran-, Dioxolan-, Tetrahydrofuran-, Tetrahydropyran-, Butyrolacton- oder Valerolacton-System gebunden sind;
M¹, M², M³, sind gleich oder verschieden -CO-O-, -O-CO-, -CO-S-, -S-CO-, -CS-O-, -O-CS-, -CH₂-O-, -O-CH₂-, -CH₂-S-, -S-CH₂-, -CH=CH-, -C≡C-, -CH₂-CH₂-CO-O-, -O-CO-CH₂-CH₂- oder eine Einfachbindung;
A¹, A², A³, A⁴ sind gleich oder verschieden 1,4-Phenylen, wobei ein oder mehrere H-Atome durch F, Cl und/oder CN ersetzt sein können, Pyrazin-2,5-diyl, wobei ein oder zwei H-Atome durch F, Cl und/oder CN ersetzt sein können, Pyridazin-3,6-diyl, wobei ein oder zwei H-Atome durch F, Cl und/oder CN ersetzt sein können, Pyridin-2,5-diyl, wobei ein oder mehrere H-Atome durch F, Cl und/oder CN ersetzt sein können, Pyrimidin-2,5-diyl, wobei ein oder zwei H-Atome durch F, Cl und/oder CN ersetzt sein können, 1,4-Cyclohexylen, wobei ein oder zwei H-Atome durch CN und/oder CH₃ und/oder F ersetzt sein können, (1,3,4)-Thiadiazol-2,5-diyl, 1,3-Dioxan-2,5-diyl, 1,3-Dithian-2,5-diyl, 1,3-Thiazol-2,4-diyl, wobei ein H-Atom durch F, Cl und/oder CN ersetzt sein kann, 1,3-Thiazol-2,5-diyl, wobei ein H-Atom durch F, Cl und/oder CN ersetzt sein kann, Thiophen-2,4-diyl, wobei ein H-Atom durch F, Cl und/oder CN ersetzt sein kann, Thiophen-2,5-diyl, wobei ein oder zwei H-Atome durch F, Cl und/oder CN ersetzt sein können, Naphthalin-2,6-diyl, wobei ein oder mehrere H-Atome durch F, Cl und/oder CN ersetzt sein können Phenanthren-2,7-diyl oder 5,10-Dihydrophenanthren-2,7-diyl,wobei jeweils ein, zwei oder mehrere H-Atome durch F ersetzt sein können und eine oder zwei CH-Gruppen durch N ersetzt sein können oder 1,3-Dioxaborinan-2,5-diyl;
a, b, c, sind 0 oder 1; und die Summe aus a, b, c ist 1, 2 oder 3.
Der niedermolekulare Flüssigkristall enthält im allgemeinen 2 bis 35, vorzugsweise 2 bis 25, besonders bevorzugt 2 bis 20 Komponenten.
Die Komponenten des niedermolekularen Flüssigkristalls werden vorzugsweise ausgewählt aus den bekannten Verbindungen mit smektischen und/oder nematischen und/oder cholesterischen Phasen, beispielsweise der Formel (I). Dazu gehören z. B.:
- Derivate des Phenylpyrimidins, wie beispielsweise in WO 86/06401, US-4 874 542 beschrieben,
- metasubstituierte Sechsringaromaten, wie beispielsweise in EP-A 0 578 054 beschrieben,
- Siliziumverbindungen, wie beispielsweise in EP-A 0 355 008 beschrieben,
- mesogene Verbindungen mit nur einer Seitenkette, wie beispielsweise in EP-A 0 541 081 beschrieben,
- Hydrochinonderivate, wie beispielsweise in EP-A 0 603 786 beschrieben,
- Phenylbenzoate, wie beispielsweise bei P. Keller, Ferroelectrics 1984, 58, 3 und J. W. Goodby et al., Liquid Crystals and Ordered Fluids, Bd. 4, New York 1984 beschrieben und
- Thiadiazole, wie beispielsweise in EP-A 0 309 514 beschrieben.

Als chirale, nicht racemische Dotierstoffe kommen beispielsweise in Frage:
- optisch aktive Phenylbenzoate, wie beispielsweise bei P. Keller, Ferroelectrics 1984, 58, 3 und J. W. Goodby et al., Liquid Crystals and Ordered Fluids, Bd. 4, New York 1984 beschrieben,
- optisch aktive Oxiranether, wie beispielsweise in EP-A 0 263 437 und WO-A 93/13093 beschrieben,
- optisch aktive Oxiranester, wie beispielsweise in EP-A 0 292 954 beschrieben,
- optisch aktive Dioxolanether, wie beispielsweise in EP-A 0 351 746 beschrieben,
- optisch aktive Dioxolanester, wie beispielsweise in EP-A 0 361 272 beschrieben,
- optisch aktive Tetrahydrofuran-2-carbonsäureester, wie beispielsweise in EP-A 0 355 561 beschrieben, und
- optisch aktive 2-Fluoralkylether, wie beispielsweise in EP-A 0 237 007 und US-5,051,506 beschrieben.

Besonders bevorzugte Komponenten des niedermolekularen Flüssigkristalls sind solche der Gruppen A bis M:
A. Phenylpyrimidinderivate der Formel (II),

   R¹-A¹-A²-R² (II)

   worin
   R¹ und R² jeweils Alkyl mit 1-15 C-Atomen, worin auch eine oder zwei nicht benachbarte CH²-Gruppen durch -O-, -S-, -CO-, -O-CO-, -CO-O-, -O-CO-O-, -CO-S-, -S-CO-, -CHHalogen, -CHCN- und/oder -CH=CH- ersetzt sein können und worin ein, mehrere oder alle H-Atome durch F ersetzt sein können,
   A¹ bedeutet 1,4-Phenylen, trans-1,4-Cyclohexylen oder eine Einfachbindung, und
   A² 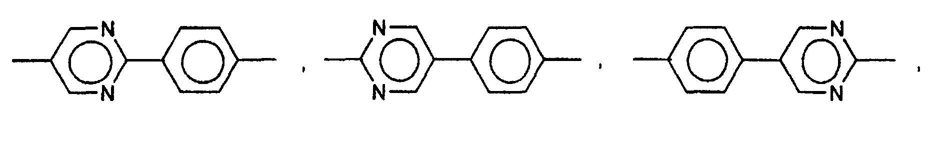 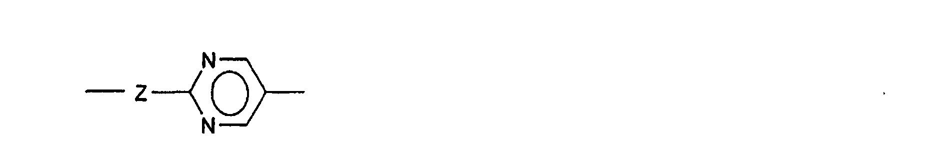 bedeutet,
   wobei Z -O-CO-, -CO-O-, -S-CO-, -CO-S-, -CH₂O-, -OCH₂- oder -CH₂CH₂- bedeutet.
B. Verbindungen mit nur einer Seitenkette der Formel (III),

   R¹(-A¹)ₐ(-M¹)_{b}(-A²)_{c}(-M²)_{d}(-A³)ₑ(-M³)_{f}(-A⁴)-H (III)

   worin bedeuten:
   - R¹:: geradkettiger oder verzweigter Alkylrest mit 1 bis 22 bzw. 3 bis 22 C-Atomen, wobei auch eine oder zwei nicht benachbarte CH₂- Gruppen durch -O-, -CO-, -CO-O-, -O-CO-, -O-CO-O- oder -Si(CH₃)₂- ersetzt sein können,
   - A¹, A², A³_{,} A⁴: gleich oder verschieden, 1,4-Phenylen, wobei ein oder zwei H-Atome durch F oder CN ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, (1,3,4)-Thiadiazol-2,5-diyl oder Naphthalin-2,6-diyl,
   - M¹, M², M³: gleich oder verschieden, -CO-O-, -O-CO-, -CH₂-O-, -O-CH₂- oder -CH₂-CH₂-, a, b, c, d, e, f null oder eins, unter der Bedingung, daß die Summe aus a+c+e 0, 1, 2 oder 3 ist;
C. Metasubstituierte Verbindungen der Formel (IV) 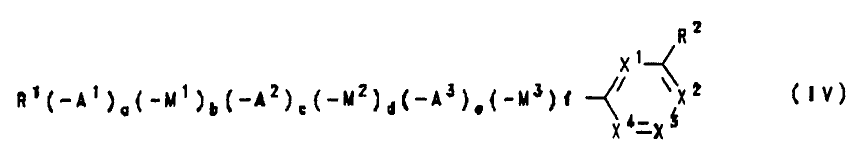 worin bedeuten:
   - R¹, R²: gleich oder verschieden, ein geradkettiger oder verzweigter Alkylrest mit 1 bis 22 bzw. 3 bis 22 C-Atomen, wobei auch eine oder zwei nicht benachbarte -CH₂-Gruppen durch -O-, -CO-, -CO-O-, -O-CO-, -O-CO-Ooder -Si(CH₃)₂- ersetzt sein können,
   - A¹, A², A³: gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrirnidin-2,5-diyi, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl,
   und A¹ auch 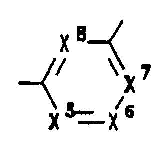
   - M¹, M², M³: gleich oder verschieden, -O-, -CO-O-, -O-CO-, -CH₂-O-, -O-CH₂-, -CH₂-CH₂-,
   - X¹, X², X³, X⁴, X⁵, X⁶, X⁷, X⁸: CH oder N, wobei die Zahl der N-Atome in einem Sechsring 0,1 oder 2 beträgt, a, b, c, d, e, f sind null oder eins, unter der Bedingung, daß die Summe aus a + c + e 0, 1, 2 oder 3 ist.
D. Siliziumverbindungen der Formel (V)

   R¹(-A¹)ₗ(-M¹)ₖ(-A²)ₗ(-M²)ₘ(-A³)ₘ-R² (V)

   worin bedeuten:
   - R¹: geradkettiges oder verzweigtes Alkyl mit 1 bis 22 bzw. 3 bis 22 C-Atomen, wobei auch eine oder zwei nicht benachbarte CH₂-Gruppen durch -O-, -CO-, -CO -O-CO- oder -O-CO-O- ersetzt sein können,
   - R²: geradkettiges oder verzweigtes Alkyl mit 1 bis 22 bzw. 3 bis 22 C-Atomen, wobei auch eine oder zwei nicht benachbarte -CH₂-Gruppen durch -O-, -CO-, -CO-O-, -O-CO- oder -O-CO-O- ersetzt sein können, mit der Maßgabe, daß eine, nicht an Sauerstoff gebundene, CH₂-Gruppe durch -Si(CH₃)₂- ersetzt ist,
   - A¹, A², A³: gleich oder verschieden 1,4-Phenylen, wobei ein oder zwei H-Atome durch F ersetzt sein können, trans-1,4-Cyclohexylen, Pyridin-2,5-diyl, wobei ein oder zwei H-Atome durch F ersetzt sein können, Pyrimidin-2,5-diyl, wobei ein oder zwei H-Atome durch F ersetzt sein können, (1,3,4)-Thiadiazol-2,5-diyl,
   - M¹, M²: gleich oder verschieden -CO-O-, -O-CO-, -CH₂-O-, -O-CH₂-, i, k, l, m, n null oder 1, mit der Maßgabe, daß i + l + n = 2 oder 3 ist.
E. Hydrochinonderivate der Formel (VI), 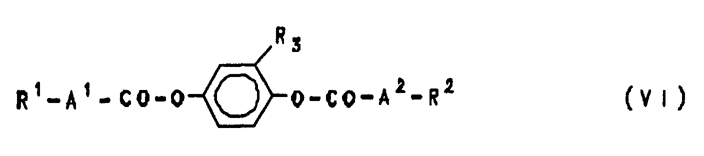 wobei bedeuten
   - R¹, R²:: gleich oder verschieden geradkettiger oder verzweigter Alkylrest mit 1 bzw. 3 bis 16 vorzugsweise 1 bzw. 3 bis 10 C-Atomen, wobei auch eine oder zwei nicht benachbarte -CH₂-Gruppen durch -O-, -CO-, -O-CO-, -CO-O-,-O-CO-O-, vorzugsweise -O-, -O-CO-, -CO-O-, ersetzt sein können,
   - R³: -CH₃, CF₃ oder-C₂H₅, vorzugsweise -CH₃, CF₃. 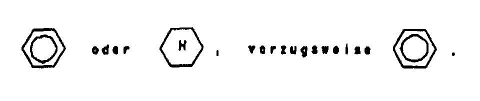
   - A¹, A²: gleich oder verschieden,
F. Pyridylpyrimidine der Formel (VII), 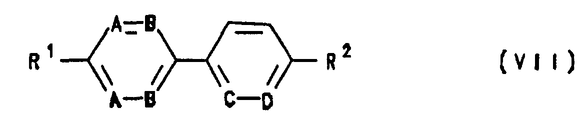 wobei bedeuten
   A gleich N und B gleich CH oder A gleich CH und B gleich N, C gleich N und D gleich CH oder C gleich CH und D gleich N,
   wobei eine oder zwei CH-Gruppen durch CF-Gruppen ersezt sein können,
   - R¹, R²: gleich oder verschieden, ein geradkettiger oder verzweigter Alkylrest mit 1 bis 22 bzw. 3 bis 22 C-Atomen, wobei auch eine oder zwei nicht benachbarte -CH₂-Gruppen durch -O-, -CO-, -CO-O-, -O-CO- oder -O-CO-O- ersetzt sein können.
G. Phenylbenzoate der Formel (VIII) 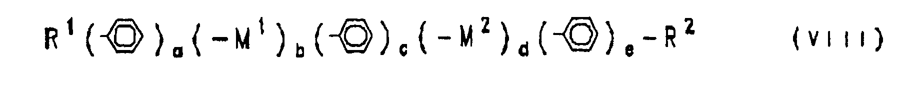 wobei bedeuten
   - R¹, R²: gleich oder verschieden, ein geradkettiger oder verzweigter Alkylrest mit 1 bis 22 bzw. 3 bis 22 C-Atomen, wobei auch eine oder zwei nicht benachbarte -CH₂-Gruppen durch -O-, -CO-, -CO-O-, -O-CO- oder -O-CO-O- ersetzt sein können,
   - M¹, M²: gleich oder verschieden, -CO-O-, -O-CO-, a, b, c, d, e null oder eins, unter der Bedingung, daß a + c + e = 2 oder 3 und b + d = 1 oder 2 ist.
H. Optisch aktive Phenylbenzoate der Formel (IX) 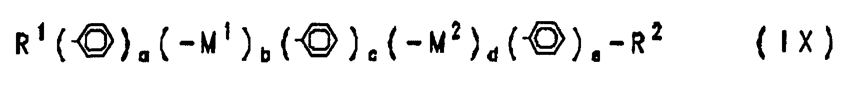 wobei bedeuten
   - R¹, R²: gleich oder verschieden, ein geradkettiger oder verzweigter Alkylrest mit 1 bis 22 bzw. 3 bis 22 C-Atomen, wobei auch eine oder zwei nicht benachbarte -CH₂-Gruppen durch -O-, -CO-, -CO-O-, -O-CO- oder -O-CO-O- ersetzt sein können, und worin wenigstens einer der Reste R¹, R² eine verzweigte, optisch aktive Alkylgruppe ist,
   - M¹, M²: gleich oder verschieden, -CO-O-, -O-CO- oder eine Einfachbindung a, b, c, d, e sind null oder eins, unter der Bedingung, daß die Summe aus a + c + e 2 oder 3 und b + d = 1 oder 2 ist.
I. Optisch aktive Oxiranether der Formel (X) 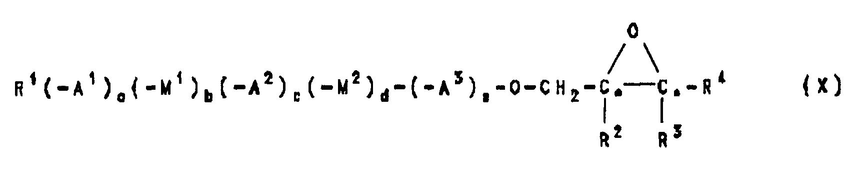 wobei die Symbole und Indizes folgende Bedeutung haben
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte -CH₂-Gruppen durch -O-, -CO-, -CO-O-, -O-CO-, -O-CO-O- oder -Si(CH₃)₂- ersetzt sein können, oder die nachfolgende, optisch aktive Gruppe, 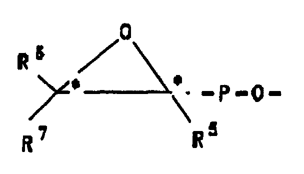
   - R², R³, R⁴, R⁵, R⁶, R⁷: gleich oder verschieden, H oder ein geradkettiger oder verzweigter Alkylrest mit 1 bis 16 C-Atomen,
   - P: -CH₂- oder -CO-
   - A¹, A², A³: sind gleich oder verschieden, 1,4-Phenylen, wobei ein oder zwei H-Atome durch F ersetzt sein können, Pyridin-2,5-diyl, wobei ein der zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1.3,4)-Thiadiazol-2,5-diyl,
   - M¹, M²: gleich oder verschieden, -CO-O-, -O-CO-, -CH₂-O-, -O-CH₂-,-CH₂-CH₂-, a, b, c, d, e null oder eins.

   Die asymmetrischen C-Atome des Oxiranrings oder der Oxiranringe können gleich oder verschieden R oder S konfiguriert sein.
J. Optisch aktive Oxiranester der Formel (Xl) 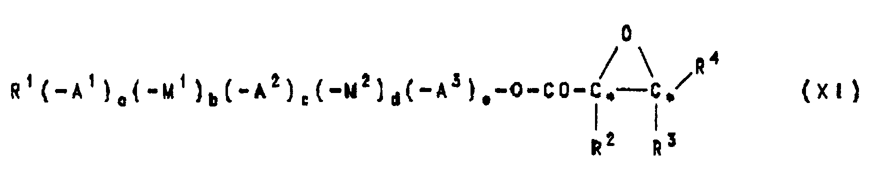 wobei die Symbole und Indizes folgende Bedeutung haben
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte -CH₂-Gruppen durch -O-, -CO-, -CO-O-, -O-CO-, -O-CO-O- oder -Si(CH₃)₂- ersetzt sein können,
   - R², R³, R⁴: gleich oder verschieden, H oder ein geradkettiger oder verzweigter Alkylrest mit 1 bis 16 C-Atomen,
   - A¹, A², A³: gleich oder verschieden, 1,4-Phenylen, wobei ein oder zwei H-Atome durch F ersetzt sein können, Pyridin-2,5-diyl, wobei ein oder zwei H-Atome jeweils durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder-CH₃ ersetzt sein können, (1,3,4)-Thiadiazol-2,5-diyl,
   - M¹, M²: gleich oder verschieden, -CO-O-, -O-CO-, -CH₂-O-, -O-CH₂-,-CH₂-CH₂-, a, b, c, d, e null oder eins.

   Die asymmetrischen C-Atome des Oxiranrings können, gleich oder verschieden, R oder S konfiguriert sein.
K. Optisch aktive Dioxolanether der Formel (XII) 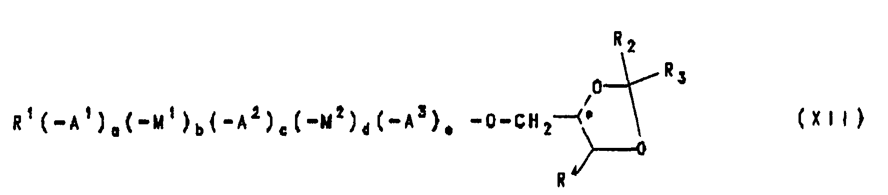 wobei die Symbole und Indizes folgende Bedeutung haben
   - *: ein chirales Zentrum
   - R¹: ein geradkettiger oder verzweigter Alkylrest mit 1 bis 22 bzw. 3 bis 22 C-Atomen, wobei auch eine oder zwei nicht benachbarte -CH₂-Gruppen durch -O-, -CO-, -CO-O-, -0-CO-, -O-CO-O oder -Si(CH₃)₂- ersetzt sein können,
   - R², R³,R⁴: gleich oder verschieden H, ein geradkettiger oder verzweigter Alkylrest mit 1 bis 16 bzw. 3 bis 10 C-Atomen oder ein Alkenylrest mit 2 bis 16 C-Atomen, wobei R² und R³ zusammen auch -(CH₂)₅- sein können,
   - A¹, A², A³: gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl,
   - M¹, M²: gleich oder verschieden, -CO-O-, -O-CO-, -CH₂-O-, -O-CH₂-,-CH₂-CH₂-, a, b, c, d, e null oder eins.

   Asymmetrische C-Atome des Dioxolanrings können, gleich oder verschieden, R oder S konfiguriert sein.
L. Optisch aktive Dioxolanester der Formel (XIII) 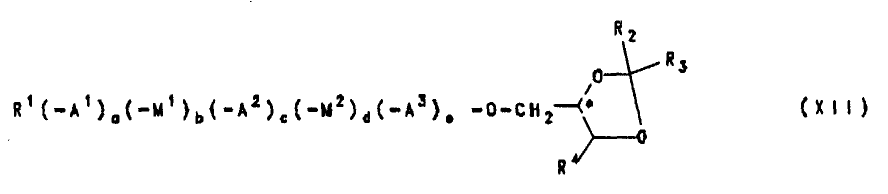 in der bedeuten:
   - R¹: geradkettiger oder verzweigter Alkyrest mit 1 bis 16 bzw. 3 bis 16 C-Atomen, wobei eine oder mehrere nicht benachbarte -CH₂ Gruppen durch -O-, -CO-, -O-CO- oder -CO-O- ersetzt sein können
   - R², R³, R⁴: gleich oder verschieden, H oder ein Alkyl- oder Alkenylrest mit 1 bis 10 bzw. 2 bis 10 C-Atomen, wobei R² und R³ zusammen auch -(CH₂)₅- sein können,
   - A¹, A², A³,: sind gleich oder verschieden, 1,4-Phenylen, wobei ein oder zwei H-Atome durch F ersetzt sein können, Pyridin-2,5-diyl, wobei ein oder zwei H-Atome durch F ersetzt sein können, Pyrimidin-2,5-diyl, wobei ein oder zwei H-Atome durch F ersetzt sein können, trans-1,4-Cyclohexylen, wobei ein oder zwei H-Atome durch -CN und/oder -CH₃ ersetzt sein können, (1,3,4)-Thiadiazol-2,5-diyl,
   - M¹, M²: gleich oder verschieden, -CO-O-, -O-CO-, -CH₂-O-, -O-CH₂-,-CH₂-CH₂-, a, b, c, d, e null oder eins.

   Asymmetrische C-Atome des Dioxolanrings können, gleich oder verschieden, R oder S konfiguriert sein.
M. Makrocyclische Verbindungen der Formel (XIV) 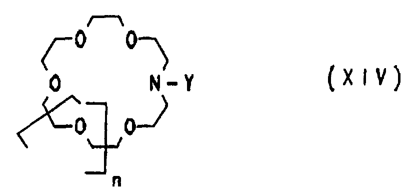 mit
   - n:: 0, 1
   - y:: -CO-(t-Butyl), -CO-(Adamantyl)

Solche Gemische aus niedermolekularen und poly- oder oligomeren ferroelektrischen Flüssigkristallen ermöglichen bistabile Anzeigen, die wegen des Gehaltes an niedermolekularen Verbindungen zwischen 60 und 95 Gew% bei einer hinreichend niedrige Schaltspannung betrieben werden können. Der Gehalt an Polymeren oder Oligomeren ist so gewählt, daß Defektlinien unterdrückt werden und sich ein hoher Schaltwinkel einstellt. Andererseits ist der Polymergehalt niedrig genug, um eine niedrige Schaltspannung und eine geringe Temperaturabhängigkeit zu ermöglichen. Geeignete niedermolekulare FLC Mischungen sind auch kommerziell erhältlich, beispielsweise ®FELIX 13, 14, 15 und 17 (Hoechst AG, Frankfurt/Main, Deutschland), insbesondere ®FELIX 17.

Der polymere oder oligomere Flüssigkristall besteht aus einer oder mehreren ferroelektrischen Polymeren und/oder Oligomeren, Oligomeren sind nach Römpps Chemie Lexikon (9. Aufl., Georg Thieme Verlag, Stuttgart 1989-92) Verbindungen, in deren Molekül nur wenige konstituelle Einheiten gleicher oder verschiedener Art miteinander verknüpft sind und deren physikalische Eigenschaften sich bei Änderung der Molekülgröße durch Hinzufügen oder Wegnahme einer oder mehrere der konstitutionellen Einheiten - im Gegensatz zum Polymer - deutlich ändern.

Bei den ferroelektrischen Polymeren handelt es sich um Seitenkettenpolymere mit Polyacrylat, Polysiloxa oder Polymethacrylathanptkette. Bei den Polymeren kann es sich um Homo- und Copolymere handeln, wobei der Begriff Copolymere nicht auf lediglich zwei unterschiedliche konstitutionelle Einheiten beschränkt ist.

Bevorzugte Polymere sind solche der allgemeinen Formel (XV), 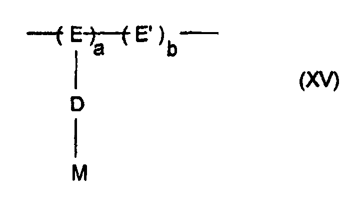 wobei 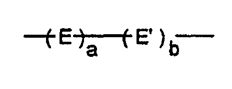 eine Polymerkette
- D: eine Spacergruppe, und
- M: eine mesogene Gruppe bedeutet
- b: kann auch 0 sein

Bei Copolymeren (b ≠ 0) kann es sich um alternierende (geordnete), statistische und Blockcopolymere handeln.

Bei der Polymerhauptkette handelt es sich um Polyacrylate, Polymethacrylate und Polysiloxane.

Verschiedene dem Fachmann bekannte Spacergruppen D (Abstandshalter) können eingesetzt werden, beispielsweise ist D eine Gruppe der Formel

(Y)_{f}-(Z)

wobei die Symbole und Indizes folgende Bedeutungen haben:
- Y:: -COO-, -O-CO-, -O-CO-O-, -O-, -S-;
- Z:: eine unverzweigte oder verzweigte Alkylgruppe mit 1 bis 30 C-Atomen, wobei eine oder mehrere, nicht direkt an Sauerstoff gebundene, CH₂-Gruppen durch -O- ersetzt sein können und wobei ein oder mehrere H-Atome durch F ersetzt sein können, und
- f:: ist 0 oder 1 und

Als mesogene Gruppe M ist eine Gruppe der Formel (XVI) bevorzugt,

-(A¹-M¹)ₐ(-A²-M²)_{b}(-A³-M³)_{c}(-A⁴)-R¹

wobei die Symbole und Indizes folgende Bedeutungen haben:
- R¹: ist optisch aktiv und ist
a) ein geradkettiger oder verzweigter Alkylrest (mit oder ohne asymmetrischem C-Atom) mit 1 bis 20 C-Atomen, wobei
   a1) eine oder mehrere nicht benachbarte und nicht terminale CH₂-Gruppen durch -O-, -S-, -CO-O-, -O-CO-, -O-CO-O- oder -Si(CH₃)₂- ersetzt sein können und/oder
   a2) eine oder mehrere CH₂-Gruppen durch -CH=CH-, Cyclopropan-1,2-diyl, 1,4-Phenylen, 1,4-Cyclohexylen oder 1,3-Cyclopentylen ersetzt sein können und/oder
   a3) ein oder mehrere H-Atome durch F und/oder Cl ersetzt sein können und/oder
   a4) die terminale CH₃-Gruppe durch eine der folgenden chiralen Gruppen (optische aktiv oder racemisch) ersetzt sein kann: 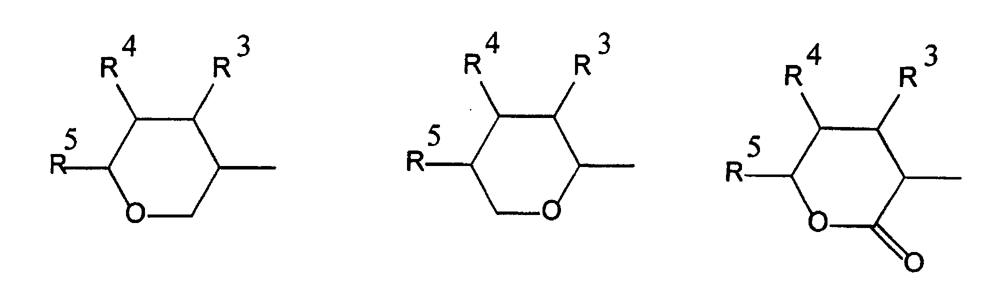 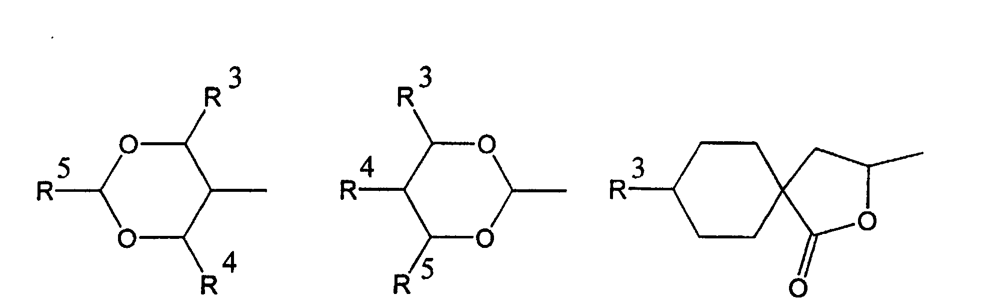 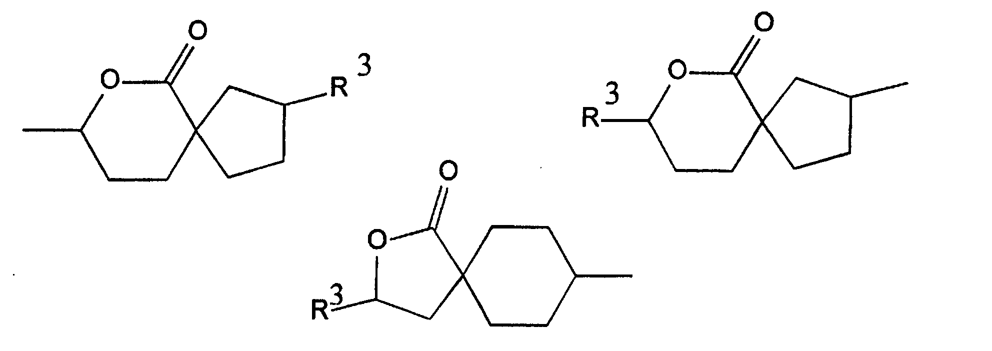 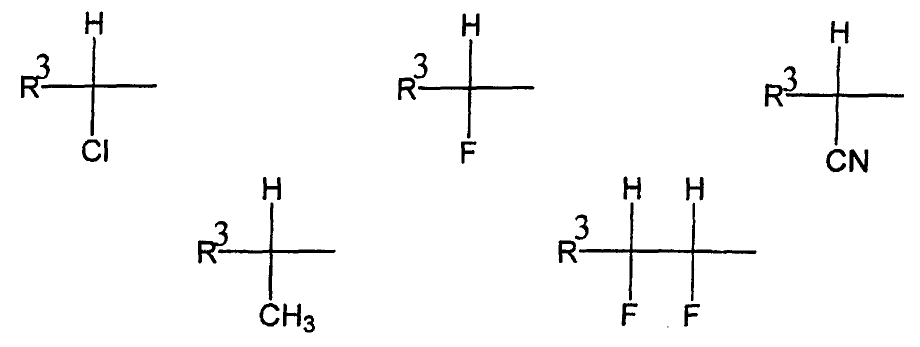
- R³, R⁴, R⁵, R⁶, R⁷: sind gleich oder verschieden
a) Wasserstoff
b) ein geradkettiger oder verzweigter Alkylrest (mit oder ohne asymmetrisches Kohlenstoffatom) mit 1 bis 6 C-Atomen, wobei
   b1) eine oder mehrere nicht benachbarte und nicht terminale CH₂-Gruppen durch -O- ersetzt sein können und/oder
   b2) eine oder zwei CH₂-Gruppen durch -CH=CH- ersetzt sein können,
c) R⁴ und R⁵ zusammen auch -(CH₂)₄- oder -(CH₂)₅-, wenn sie an ein Oxiran-, Dioxolan, Tetrahydropyran-, Butyrolacton- oder Valerolacton-System gebunden sind,
- M¹, M², M³: sind gleich oder verschieden -CO-O-, -O-CO-, -CO-S-, -S-CO-, -CS-O-, -O-CS-, -O-CS-, -CH₂-O-, -O-CH₂-, -CH₂-S-, -S-CH₂-, -CH=CH-, -C≡C-, -CH₂-CH₂-CO-O-, -O-CO-CH₂-CH₂- oder eine Einfachbindung;
A¹, A², A³, A⁴ sind gleich oder verschieden, 1,4-Phenylen, wobei ein oder mehrere H-Atome durch F, Cl und/oder CN ersetzt sein können, Pyrazin-2,5-diyl, wobei ein oder zwei H-Atome durch F, Cl und/oder CN ersetzt sein können, Pyridazin-3,6-diyl, wobei ein oder zwei H-Atome durch F, Cl und/oder CN setzt sein können, Pyridin-2,5-diyl, wobei ein oder mehrere H-Atome durch F, Cl und/oder CN ersetzt sein können, Pyrimidin-2,5-diyl, wobei ein oder zwei H-Atome durch F, Cl und/oder CN ersetzt sein können, 1,4-Cyclohexylen, wobei ein oder zwei H-Atome durch CN und/oder CH₃ und/oder F ersetzt sein können, (1,3,4)-Thiadiazol-2,5-diyl, 1,3-Dioxan-2,5-diyl, 1,3-Dithian-2,5-diyl, 1,3-Thiazol-2,4-diyl, wobei ein H-Atom durch F, Cl und/oder CN ersetzt sein kann, 1,3-Thiazol-2,5-diyl, wobei ein H-Atom durch F, Cl und/oder CN ersetzt sein kann, Thiophen-2,4-diyl, wobei ein H-Atom durch F, Cl und/oder CN ersetzt sein kann, Thiophen-2,5-diyl, wobei ein oder zwei H-Atome durch F, Cl und/oder CN ersetzt sein können; Naphthalin-2,6-diyl, wobei ein oder mehrere H-Atome durch F, Cl und/oder CN ersetzt ein können oder 1,3-Dioxaborinan-2,5-diyl; a, b, c sind 0 oder 1; und die Summe aus a, b, c ist 1, 2 oder 3.

Die mesogenen Gruppen haben die Formel

Z-R¹

wobei Z aus der Gruppe 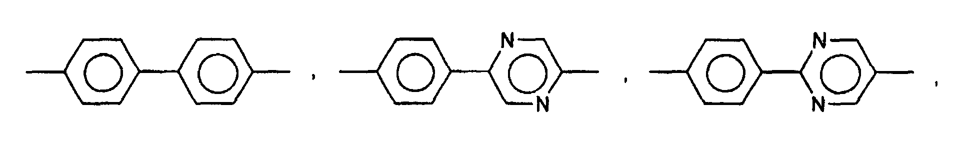 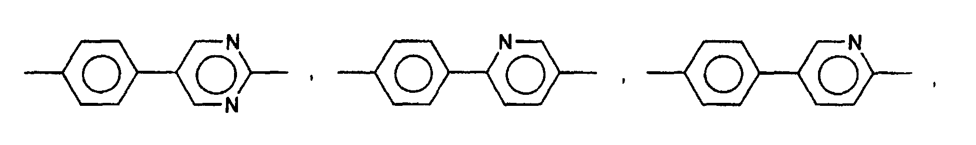 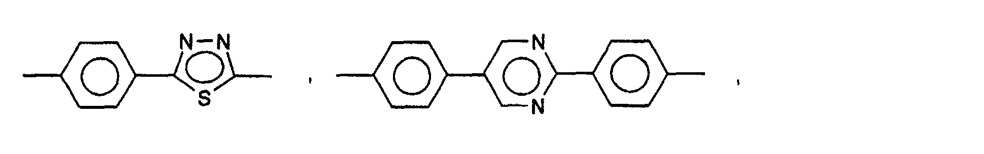 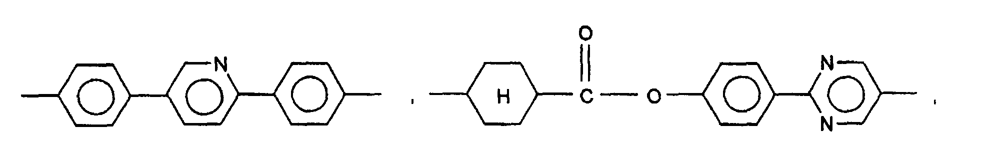 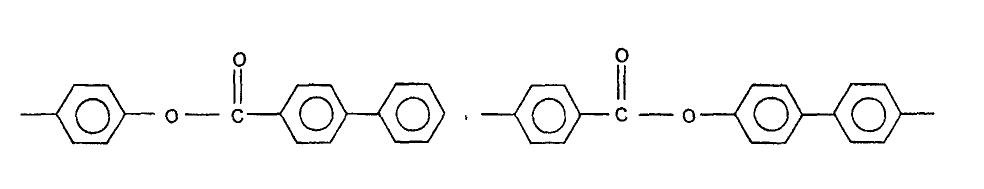 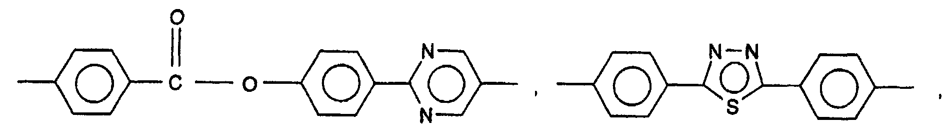 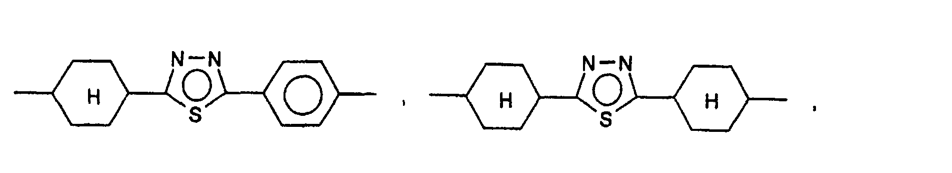 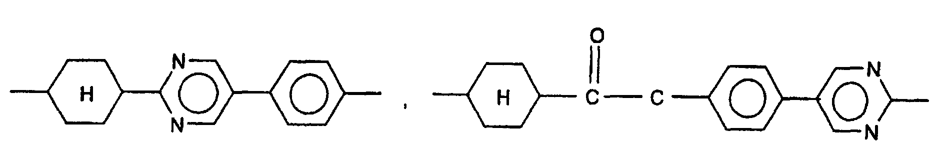 ist und
R¹ die oben angegebene Bedeutungen hat.
   Die Hauptkettenstrukturen sind:
   a) Poly(methy)acrylate 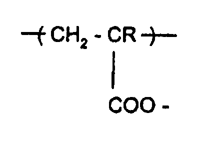 (R = H, CH₃, F)
   b Polysiloxane 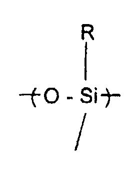 R: C₁-C₄-Alkyl

Ganz besonders bevorzugt sind Polyacrylate.

Insbesondere bevorzugt als polymerer Flüssigkristall sind die in den folgenden Schriften offenbarten Polymere, sofern sie unter die Definition von Anspruch 1 fallen.

| | | | |
|---|---|---|---|
| US-4,904,065 | US-4,818,807 | EP-A-0 231 770 | EP-A-0 228 703 |
| EP-A-0 424 461 | US 5,288,425 | US-5,227,090 | EP-A-0 428 542 |
| DE-A 43 00 435 | | | |

Ganz besonders bevorzugt als polymerer Flüssigkristall ist das folgende Polyacrylat:

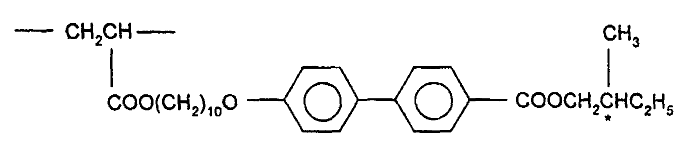

Die Herstellung der polymeren, oligomeren und niedermolekularen Flüssigkristallkomponenten erfolgt nach an sich bekannten dem Fachmann geläufigen Methoden, wie sie beispielsweise in Houben Weyl, Methoden der Organischen Chemie. Georg Thieme Verlag Stuttgart oder auch den zitierten Schriften beschrieben werden.

Die erfindungsgemäß eingesetzten Mischungen enthalten 60 bis 95 Gew % der niedermolekularen Komponente, besonders bevorzugt 65 bis 80 Gew %.
Die Herstellung der Mischung erfolgt nach an sich bekannten Methoden.

Die Ausbeutung des erfindungsgemäßen Displays erfolgt im allgemeinen direkt oder als Multiplex-Ansteuerung (siehe z.B. Jean Dijon in Liquid Crystals, Application and Uses (Ed. B. Bahadur) Vol. 1, 1990, Chapter 13. pp. 305-360) oder T. Harada, M.
Taguchi, K. Iwasa, M. Kai SID 85 Digest, page 131 (1985).

Die verwendeten Kunststoffkaten sind bekannt, und größtenteils kommerziell erhältlich (z.B. Gemplus, http://www.gemplus.fr).
Sie bestehen beispielsweise aus PVC (Polyvinylchlorid), ABS (Acrylnitril-Butadien, -Styrol-Copolymer).

Die erfindungsgemäße Chipkarte eignet sich beispielsweise als Scheckkarte, elektronische Fahrkarte oder für Pay-TV.

Die Erfindung durch ein Beispiel näher erläutert.

### Beispiel:

Eine flexible Kunststoffolie (erhältlich z.B. von der Firma Sumitomo Bakelite, Produktbezeichnung FST 5352, Dicke 100 µm, 200 Ω / Indium-Zinnoxid-beschichted) wird in einem fotolithographischen Prozeß strukturiert, so daß ein Elektrodenmuster erhalten wird. Die transparenten Leiterbahnen dieser Elektrodenstruktur werden zur elektrischen Ansteuerung des Displays verwendet. Zwei strukturierte Folien, die Ober- und Unterseite des Displays bilden, werden mit Hilfe eines Kleberahmens zusammen gefügt und mit einem Gemisch aus 19,5 Gew% flüssigkristallinem Acrylat
Struktur des Acrylats: 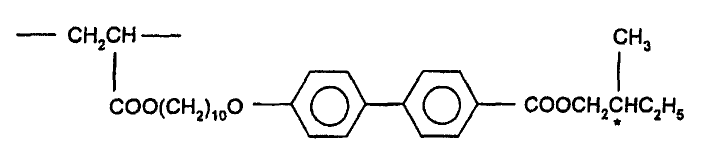 und 80 Gew % einer ferroelektrischen smC* Breitbereichsmischung (®Felix 17, Hoechst AG, Frankfurt, Deutschland) und einer Konzentration von 0,5 Gew% Abstandhalter-Kugeln gefüllt. Der Kleber wird gehärtet, die Zelle versiegelt, durch langsames Abkühlen auf Betriebstemperatur orientiert und zwischen einem Paar Polarisationsfolien in eine 'smart cart' eingebaut. Die nach außen geführten Kontakte der Elektroden der Schaltzelle werden mit den entsprechenden Kontakten oder Flachspulen der 'smart card' verbunden. Bei Anlegen einer Spannung von 10 V läßt sich diese Zelle bei 25 °C betreiben.

## Patentansprüche

1. Chipkarte, enthaltend ein ferroelektrisches Flüssigkristalldisplay mit einer ferroelektrischen Flüssigkristallschicht, **dadurch gekennzeichnet, daß** die Flüssigkristallschicht aus einem Gemisch niedermolekularer und polymerer oder oligomerer Flüssigkristalle besteht, wobei das Gemisch 60 bis 95 Gew.-% der niedermolekularen Komponente enthält und es sich bei den polymeren Flüssigkristallen um Seitenkettenpolymere mit Polyacrylat-, Polymethacrylat- oder Polysiloxanhauptkette und Seitenketten der formel -D-Z-R¹ handelt,
wobei Z aus der Gruppe 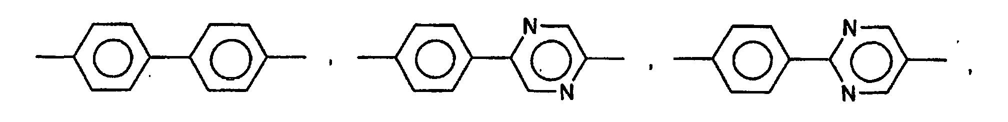 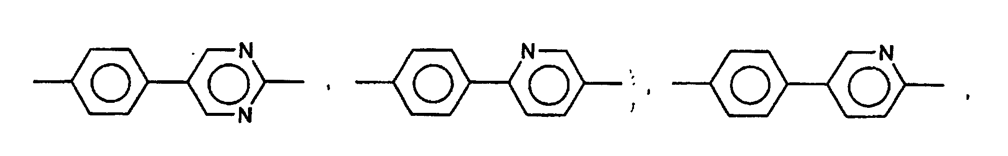 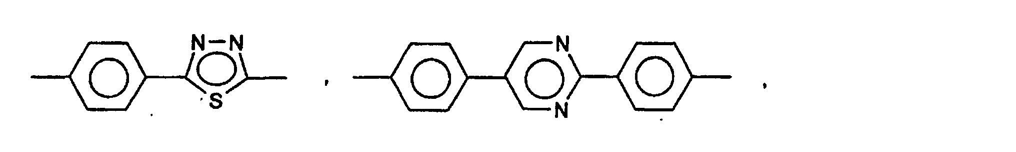 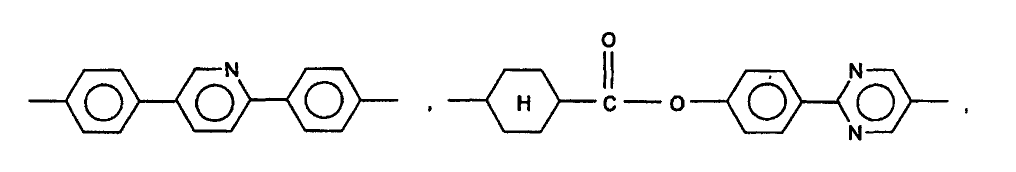 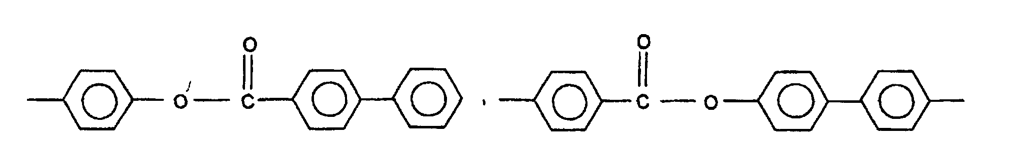 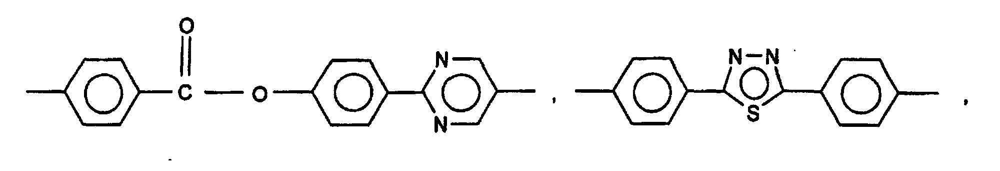 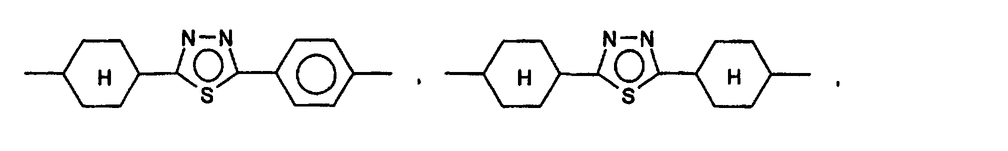 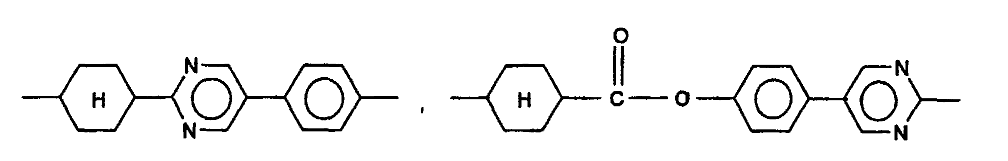 ist und
D eine Spacergruppe ist und
R¹ optisch aktiv ist und
a) ein geradkettiger oder verzweigter Alkylrest mit oder ohne asymmetrischem C-Atom mit 1 bis 20 C-Atomen ist wobei
a1) eine oder mehrere nicht benachbarte und nicht terminale CH₂-Gruppen durch -O-, -S-, -CO-O-, -O-CO-, -O-CO-O- oder -Si(CH₃)₂- ersetzt sein können und/oder
a2) eine oder mehrere CH₂-Gruppen durch -CH=CH-, Cyclopropan-1,2-diyl, 1,4-Phenylen, 1,4-Cyclohexylen oder 1,3-Cyclopentylen ersetzt sein können und/oder
a3) ein oder mehrere H-Atome durch F und/oder Cl ersetzt sein können und/oder
a4) die terminale CH₃-Gruppe durch eine der folgenden chiralen Gruppen, optische aktiv oder racemisch, ersetzt sein kann: 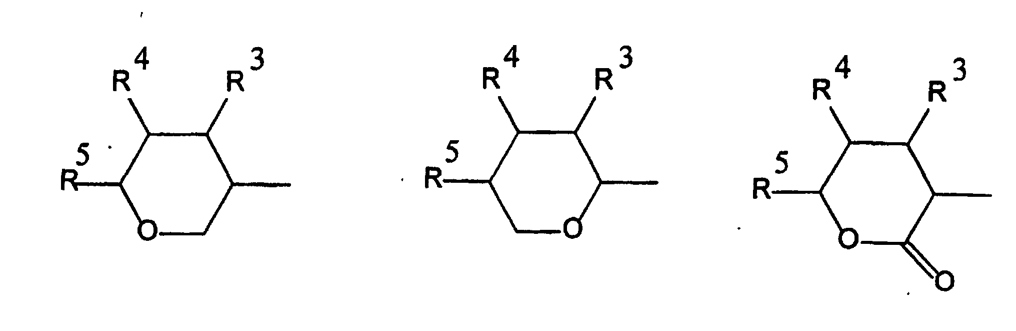 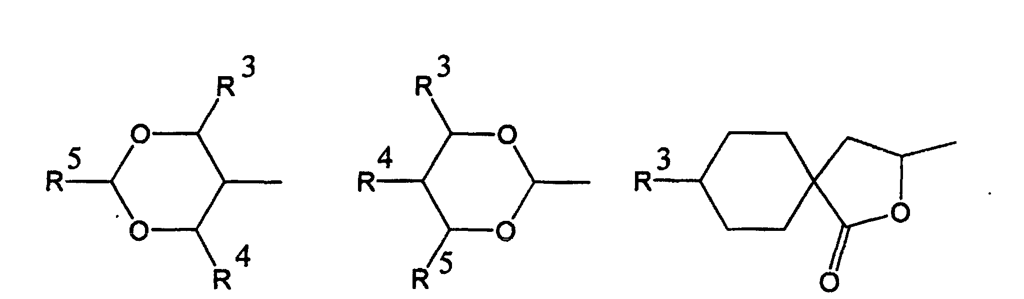 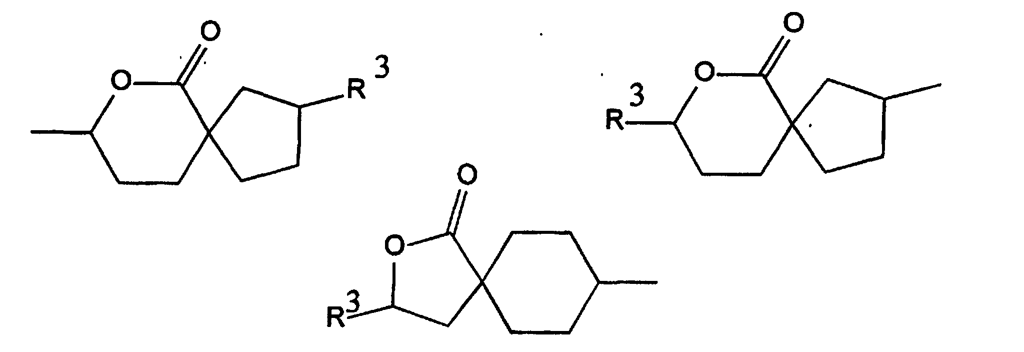 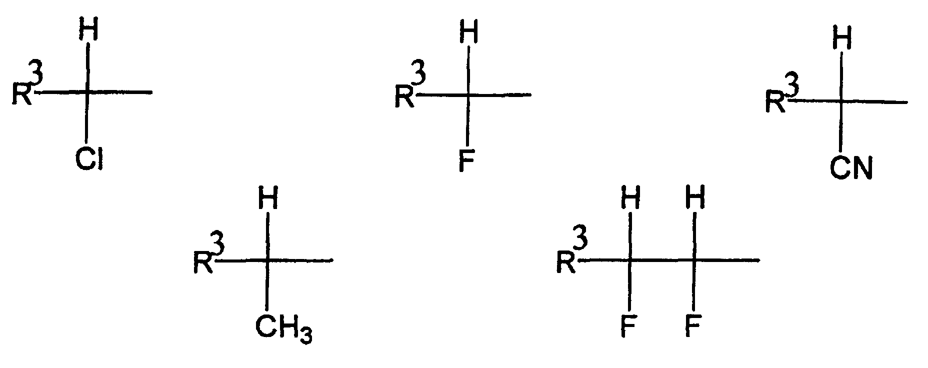
und wobei R³, R⁴, R⁵, R⁶, R⁷ gleich oder verschieden sind und ausgewählt sind aus
a) Wasserstoff
b) ein geradkettiger oder verzweigter Alkylrest mit oder ohne asymmetrisches Kohlenstoffatom mit 1 bis 6 C-Atomen, wobei
b1) eine oder mehrere nicht benachbarte und nicht terminale CH₂-Gruppen durch -O- ersetzt sein können und/oder
b2) eine oder zwei CH₂-Gruppen durch -CH=CH- ersetzt sein können, und
c) R⁴ und R⁵ zusammen auch -(CH₂)₄- oder -(CH₂)₅-, wenn sie an ein Oxiran-, Dioxolan, Tetrahydropyran-, Butyrolacton- oder Valerolacton-System gebunden sind.

2. Chipkarte nach Anspruch 1, **dadurch gekennzeichnet, daß** die Trägerplatten des ferroelektrischen Flüssigkristalldisplays aus beschichteten Polymerfolien bestehen.

## Claims

1. A chip card having a ferroelectric liquid-crystal display containing a ferroelectric liquid-crystal layer, wherein the liquid-crystal layer consists of a mixture of low-molecular-weight and polymeric or oligomeric liquid crystals, wherein the mixture contains 60 to 95% by weight of the -jow-molecular-weight component and the polymeric liquid crystals are side chain polymers having a polyacrylate, polymethacrylate or polysiloxane main chain and side chains of the formula -D-Z-R¹
in which Z is from the group consisting of 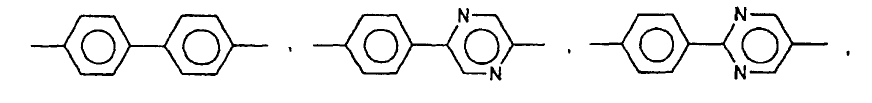 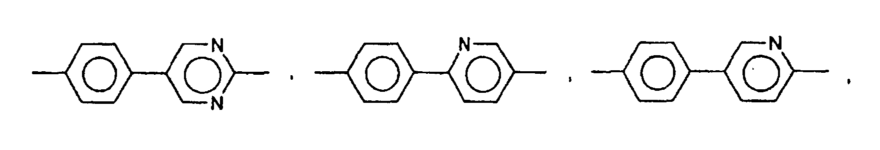 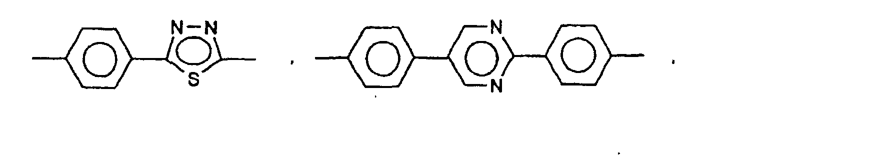 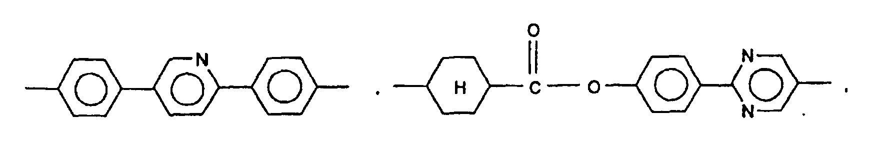 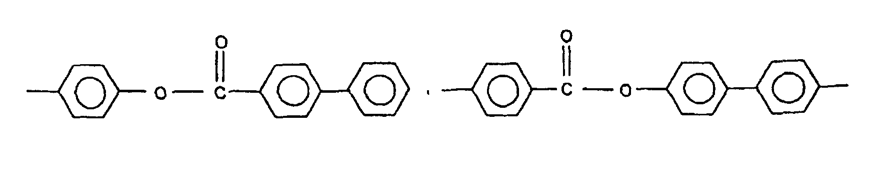 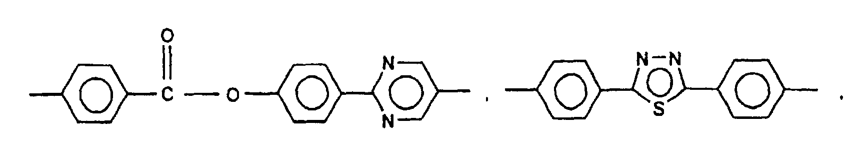 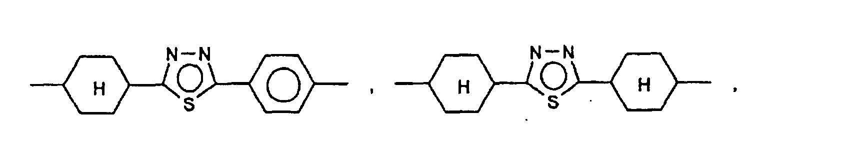 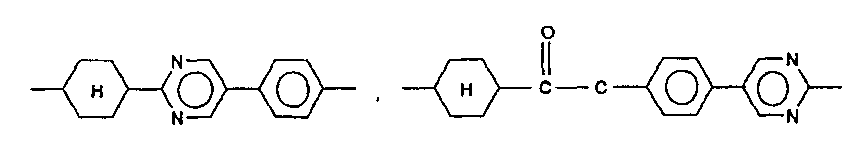 and
D is a spacer group and
R¹ is optically active and is
a) a straight-chain or branched alkyl radical with or without an asymmetrical carbon atom having 1 to 20 carbon atoms, where
a1) one or more non-adjacent and non-terminal -CH₂- groups may be replaced by -O-, -S-, -CO-O-, -O-CO-, -O-CO-O- or - Si(CH₃)₂-, and/or
a2) one or more -CH₂- groups may be replaced by -CH=CH-, cyclopropane-1,2-diyl, 1,4-phenylene, 1,4-cyclohexylene or 1,3-cyclopentylene, and/or
a3) one or more H atoms may be replaced by F and/or Cl, and/or
a4) the terminal -CH₃ group may be replaced by one of the following chiral groups, optically active or racemic: 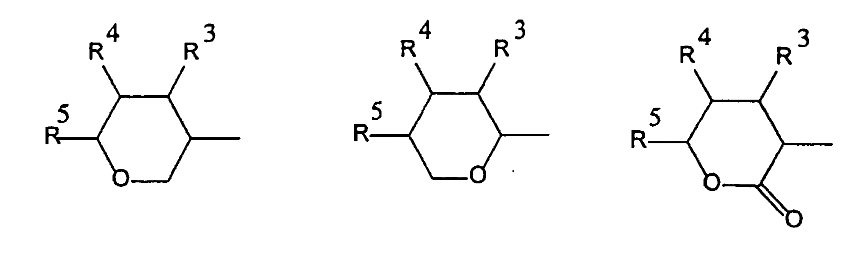 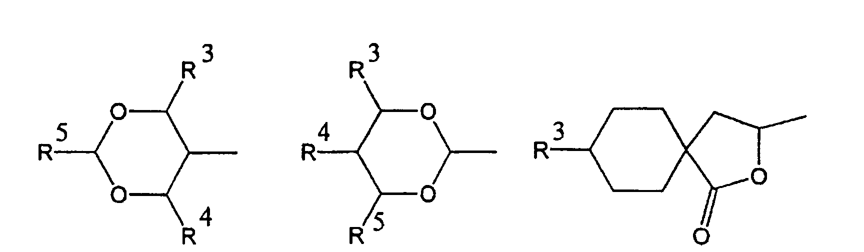 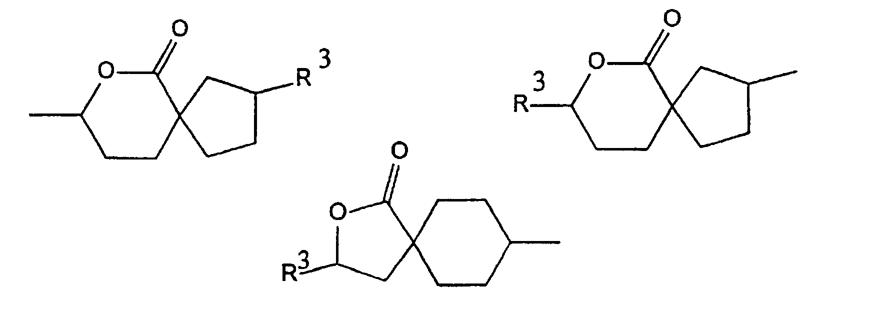 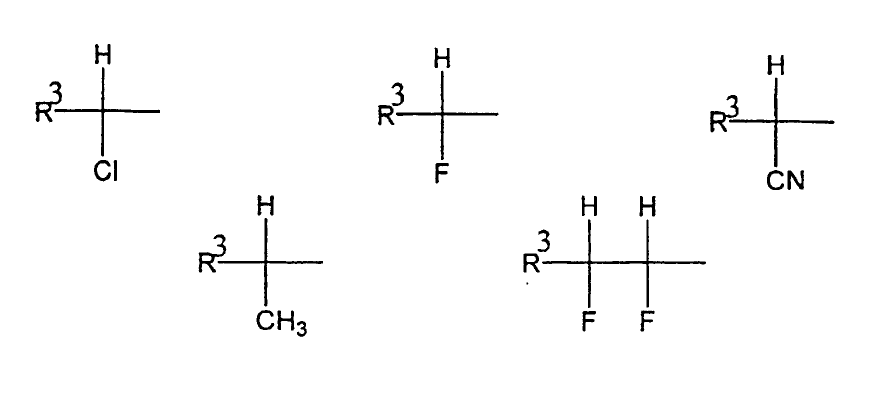
R³, R⁴, R⁵, R⁶ and R⁷ are identical or different and are selected from
a) hydrogen
b) a straight-chain or branched alkyl radical with or without an asymmetrical carbon atom having 1 to 6 carbon atoms, where
b1) one or more non-adjacent and non-terminal -CH₂- groups may be replaced by -O-, and/or
b2) one or two -CH₂- groups may be replaced by -CH=CH-, and
c) R⁴ and R⁵ together may alternatively be -(CH₂)₄- or -(CH₂)₅- if they are bonded to an oxirane, dioxolane, tetrahydropyran, butyrolactone or valerolactone system.

2. A chip card as claimed in claim 1, wherein the outer plates of the ferroelectric liquid-crystal display consist of coated polymer films.

## Revendications

1. Carte à puce, contenant un écran à cristaux liquides ferroélectrique, avec une couche de cristaux liquides ferroélectrique, **caractérisée en ce que**, la couche de cristaux liquides est composée d'un mélange de cristaux liquides de faible poids moléculaire et de cristaux liquides polymères ou oligomères, où le mélange contient 60 à 95% en poids des composants de faible poids moléculaire et où les cristaux liquides polymères consistent en polymères à chaîne latérale avec une chaîne principale de polyacrylate, de polyméthacrylate ou de polysiloxanne et des chaînes latérales de formule -D-Z-R¹, où Z est de l'ensemble 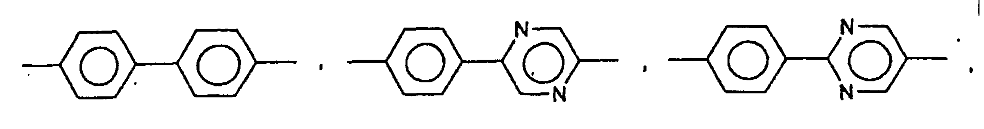 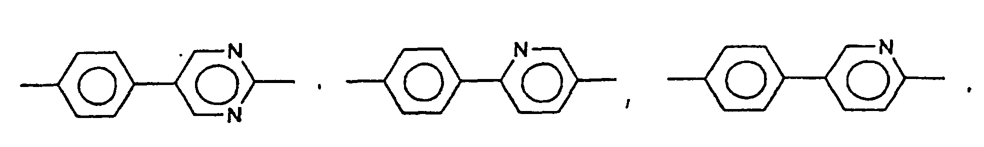 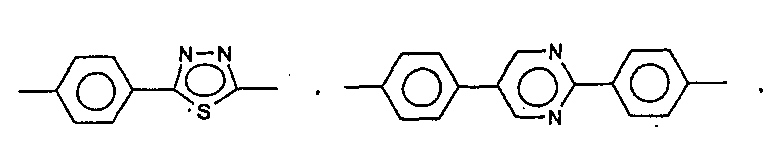 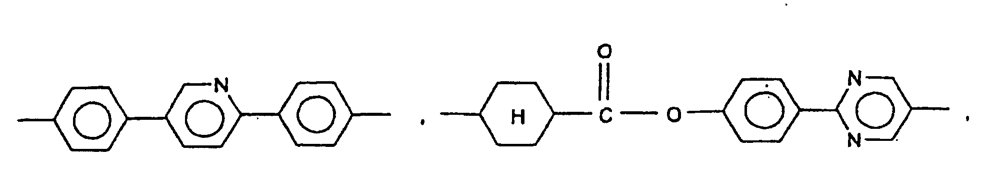 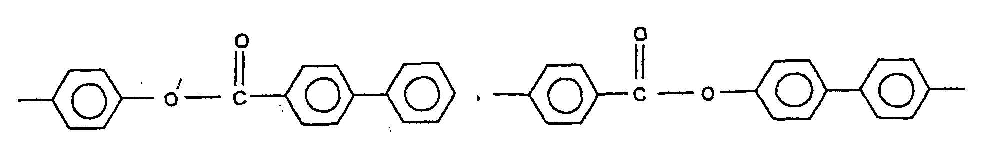 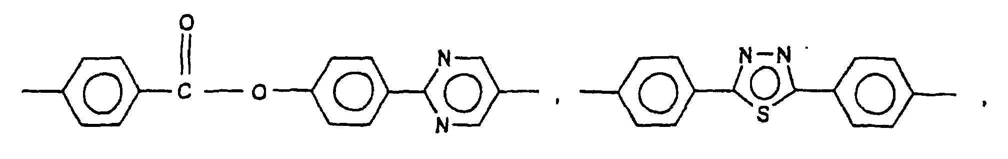 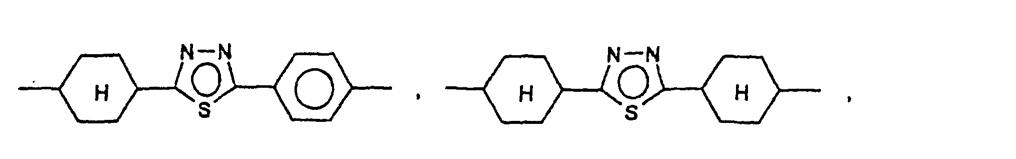 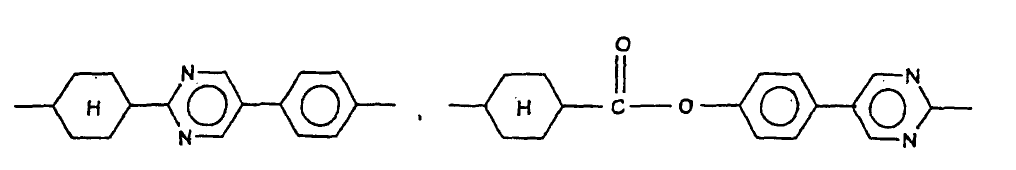 et D est un spacéogroupe et
R¹ est optiquement actif et est
a) un résidu alkyle linéaire ou ramifié comportant 1 à 20 atomes de carbone avec ou sans atome de carbone asymétrique, dans lequel
a1) un ou plusieurs groupes CH2 non voisins et non terminaux peuvent être remplacés par -O-, -S-, un groupe
-CO-O-, -O-CO-, -O-CO-O- ou -Si(CH3)2- et /ou
a2) un ou plusieurs groupes CH2 peuvent être remplacés par un groupe -CH=CH-, cyclopropane-1,2-diyle, 1,4-phénylène, 1,4-cyclohexylène ou 1,3-cyclopentylène et /ou
a3) un ou plusieurs atomes d'hydrogène peuvent être remplacés par un atome de fluor et/ou de chlore et/ou
a4) le groupe CH3 terminal peut être remplacé par un des groupes suivants chiraux, optiquement actifs ou racémiques: 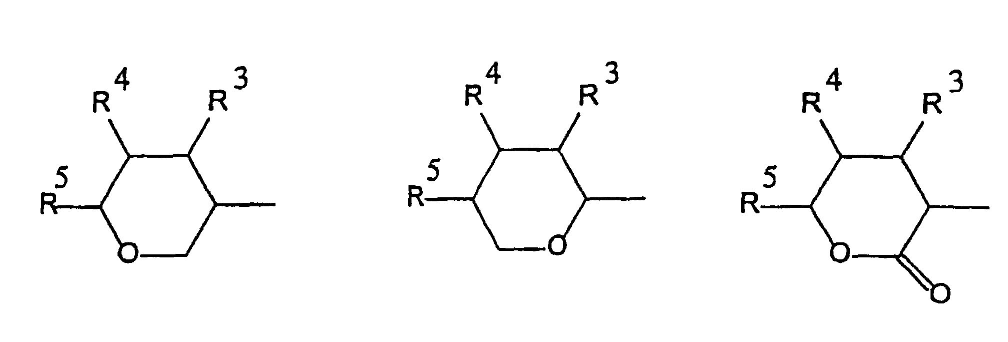 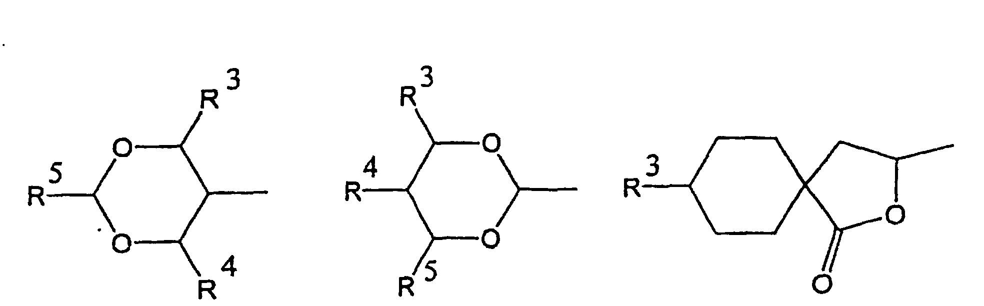 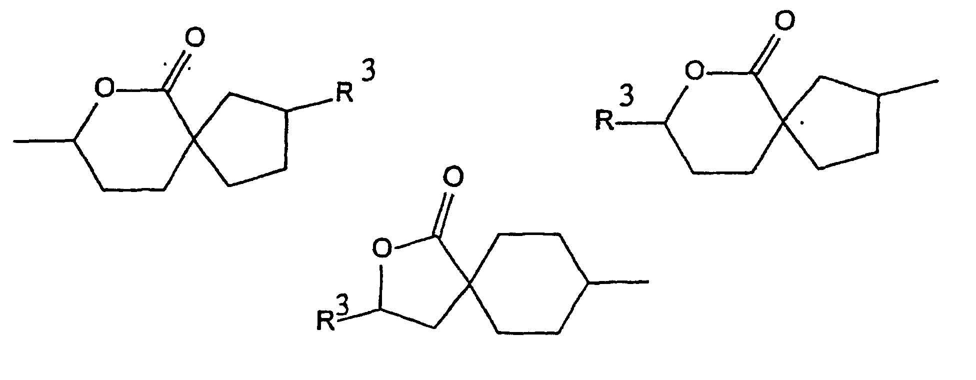 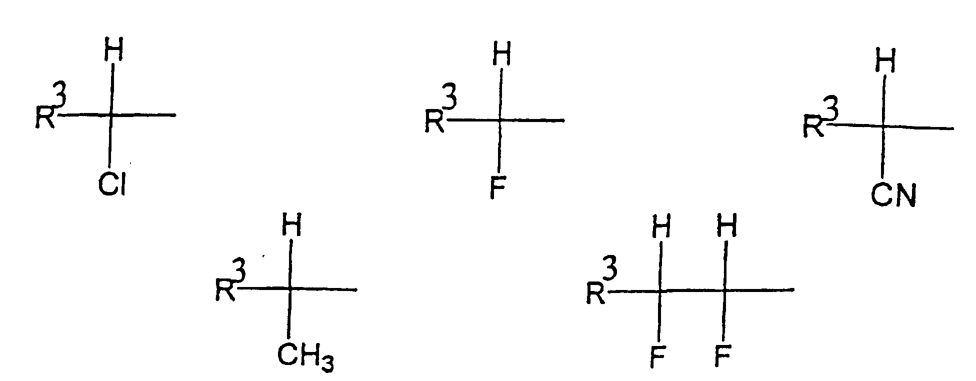
où R³, R⁴, R⁵, R⁶, R⁷ sont identiques ou différents et sont choisis parmi
a) un atome d'hydrogène
b) un résidu alkyle linéaire ou ramifié ayant 1 à 6 atomes de carbone avec ou sans atome de carbone asymétrique, dans lequel
b1) un ou plusieurs groupes CH2 non voisins et non terminaux peuvent être remplacés par un atome -O-et/ou
b2) un ou deux groupes CH2 peuvent être remplacés par -CH=CH-, et
c) R⁴ et R⁵ sont conjointement soit -(CH2)4- soit -(CH2)5- quand ils sont liés à un système oxiranne, dioxolanne, tétrahydropyranne, butyrolactone ou valérolactone.

2. Carte à puce selon la revendication 1, **caractérisée en ce que**, les plaques de support de l'écran à cristaux liquides sont composées de feuilles de polymère enduites.
